# EUROPEAN PATENT APPLICATION

(11) **EP 3 130 840 A2**
(43) Date of publication of application: **15.02.2017**
(21) Application number: 16181197.1
(22) Date of filing: 26.07.2016
(51) Int. Cl.: F21S 8/10

(54) **LIGHT MODULE WITH INCORPORATED LENS**

(30) Priority: 10.08.2015 US 201514822849
(71) Applicant: Taiwan Network Computer & Electronic Co., Ltd., New Taipei City 24757 (TW)
(72) Inventor: PENG, Chia-Mei, 32471 Taoyuen City (TW); CHUANG, Hsieh-Chen, 24757 New Taipei City (TW); CHUANG, Ping-Han, 24757 New Taipei City (TW)
(74) Representative: Ruschke, Hans Edvard

(57) **Abstract**

A lens incorporated light module (C01/C02/C03) includes a reflector (601/701/801), a light source (604/704/705/804) mounted in the reflector (601/701/801), and a lens (A01∼12/703/803) mounted in a front side of the reflector (601/701/801) for making the most of the light emitted by the light source (604/704/705/804) and reflected by the reflector (601/701/801) into high beam light or low beam light for lighting. Thus, the lens incorporated light module (C01/C02/C03) is practical for use in a vehicle headlight, avoiding emitted light rays from shining into the eyes of the drivers of the vehicles coming from the opposite direction.

## Description

### BACKGROUND OF THE INVENTION

### 1. Field of the Invention:

The present invention relates to a lighting technology, and more particularly to a lens incorporated light module practical for use in a vehicle head light, which makes the most of emitted light into high beam light or low beam light for lighting, improving the luminous efficacy.

### 2. Description of the Related Art:

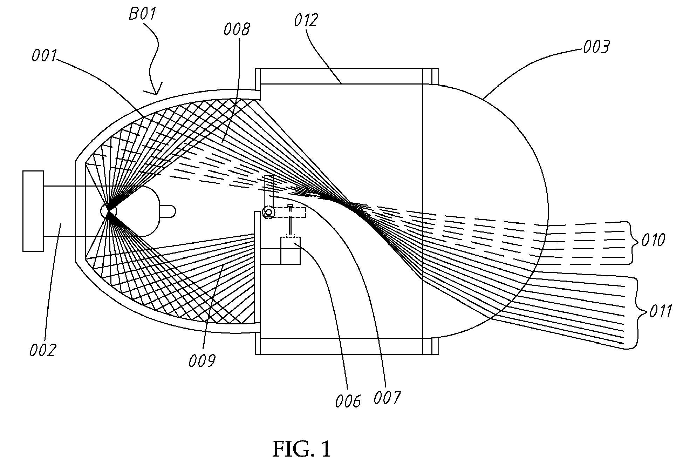

FIG. 1 is a sectional view illustrating the light path of a light module for vehicle head light according to the prior art. The light module (A01) comprises a reflector (001), a light source (002) located at the top side of the reflector (001), a tubular lens mounting bracket (012) fastened with one end thereof to the bottom side of the reflector (001), a plano-convex lens (003) mounted in the other end of the tubular lens mounting bracket (012), a light shield (007) located at the border of the bottom side of the reflector (001), an electromagnetic valve (006) connected with the light shield (007) and adapted for controlling the tilt angle of the light shield (007) to achieve switching between a high beam mode and low beam mode. In application, when controlling the light module (A01) to emit low beam light, the electromagnetic valve (006) is controlled to move the light shield (007) to a high tilt angle position to shield the imaginary line-indicated part of the reflected light (008), enabling the solid line-indicated part of the reflected light (008) to be finally refracted by the plano-convex lens (003) into low beam light (011) under the horizontal line. On the contrary, when controlling the light module (A01) to emit high beam light, the electromagnetic valve (006) is controlled to move the light shield (007) to a low tilt angle position, enabling the previously shielded imaginary line-indicated part of the reflected light (008) to be finally refracted by the plano-convex lens (003) into high beam light (010) for illumination. The major drawback of this design of light module (A01) is that the light module can simply achieve one half of the efficiency due to that the reflected light (009) coming from the lower half of the reflector (001) is shielded by the tubular lens mounting bracket (012). Further, in the low beam mode, the light shield (007) blocks out a large amount of the emitted light. Either in the high beam mode or low beam mode, this design of light module cannot achieve a high performance.

### SUMMARY OF THE INVENTION

The present invention has been accomplished under the circumstances in view. It is therefore the main object of the present invention to provide a lens incorporated light module, which enables the most of the emitted light to be effectively used for lighting and makes the most of the emitted light into high beam light or low beam light for lighting, improving the luminous efficacy.

To achieve this and other objects of the present invention, a lens incorporated light module comprises a light source, a reflector surrounding the light source, a tubular lens mounting bracket having one end thereof connected to a bottom side of the reflector, and a lens mounted in an opposite end of the tubular lens mounting bracket. The lens is formed of a light-transmissive plate having opposing top plane and bottom plane. The light-transmissive plate can be a circular or multilateral plate, having at least one positioning member located on the peripheral edge thereof. Further, the top plane comprises at least one convex arched surface or curved surface as a light exit surface. The bottom plane works as a light incident surface, comprising at least one sloping surface that can be a beveled flat surface or arched sloping surface. The direction and angle of the sloping surface can be modified according to the angle and direction the incident light to be refracted. Further, every sloping surface is so configured that the heights on the opposing left and right sides relative to the vertical centerline are unequal, enabling the low beam light illumination region to exhibit a clear cutoff line,

Further, lamp bulb or LED can be selectively used for the light source.

Further, the tubular lens mounting bracket can be externally decorated with at least one conical ornament or a warning light module.

In one embodiment of the present invention, the top plane further comprises an annular convex curved surface extended around the at least one convex arched surface thereof. Alternatively, the top plane can be configured to provide two semi-annular convex curved surfaces that are disposed above and below the horizontal centerline and extended around the at least one convex arched surface in an asymmetric manner. Further, each curved surface can be configured consisting of a plurality of arched sloping surfaces that are connected to one another and slope in different directions and at different angles.

In one embodiment of the present invention, the at least one sloping surface of the bottom plane is disposed below the horizontal centerline in one lateral side relative to the vertical centerline. Each sloping surface can be a beveled flat surface, arched sloping surface, or a combination of a beveled flat surface and an arched sloping surface. Alternatively, at least one beveled flat surface or arched sloping surface can be provided at an opposite lateral side relative to the vertical centerline, or multiple arched sloping surfaces sloping in different directions and at different angles and connected to one another can be provided above the horizontal centerline.

In one embodiment of the present invention, the at least one sloping surface of the bottom plane is disposed below the horizontal centerline; each sloping surface can be formed of an arched sloping surface, or multiple arched sloping surfaces that are connected to one another and slope in different directions and at different angles. Further, two arched sloping surfaces can be respectively disposed below the horizontal centerline and at the two opposite sides relative to the vertical centerline in an asymmetric manner, wherein each arched sloping surface can be formed of a plurality of arched sloping surfaces that slope in different directions and at different angles and are connected to one another.

In one embodiment of the present invention, the at least one sloping surface of the bottom plane is disposed above the horizontal centerline; each sloping surface can be formed of an arched sloping surface, or multiple arched sloping surfaces that are connected to one another and slope in different directions and at different angles. Further, two arched sloping surfaces can be respectively disposed above the horizontal centerline and at the two opposite sides relative to the vertical centerline in an asymmetric manner, wherein each arched sloping surface can be formed of a plurality of arched sloping surfaces that slope in different directions and at different angles and are connected to one another.

In one embodiment of the present invention, the bottom plane comprises two arched sloping surfaces respectively disposed above and below the horizontal centerline. Further, the sloping surface of the bottom plane can be formed of a plurality of arched sloping surfaces that slope in different directions and at different angles and are connected to one another. Alternatively, two arched sloping surfaces can be provided at two opposite lateral sides of the vertical centerline. Further, each arched sloping surface at each lateral side relative to the vertical centerline can be configured consisting of a plurality of arched sloping surfaces that slope in different directions and at different angles and are connected to one another.

In one embodiment of the present invention, the lens incorporated light module further comprises a light shield mounted in the tubular lens mounting bracket adjacent to the reflector. The light shield can be fixedly connected to the tubular lens mounting bracket. Alternatively, the light shield can be pivotally connected to the tubular lens mounting bracket, and movable by an electromagnetic valve relative to the tubular lens mounting bracket to change its tile angle. Preferably, the light shield is so configured that the heights on the opposing left and right sides relative to the vertical centerline are unequal.

In one embodiment of the present invention, the lens incorporated light module further comprises a support member mounted in the tubular lens mounting bracket, a grating movably mounted on the support member and adapted for controlling the incident angle of the light reflected by the reflector into the lens, and an electromagnetic valve connected with a retractable valve stem thereof to the grating and operable to control the tilt angle of the grating. The grating is formed of a light-transmissive plate having two opposing planes and defining a vertical centerline. Further, the grating comprises an arched sloping surface located on a middle area of one plane thereof with the topmost edge of the arched sloping surface abutted to the vertical centerline.

In one embodiment of the present invention, the lens incorporated light module comprises a light source, at least one reflector surrounding the light source and adapted for reflecting the light emitted by the light source toward an outer side, a tubular lens mounting bracket having one end thereof connected to a bottom side of the at least one reflector, a lens formed of a light-transmissive plate and mounted in an opposite end of the tubular lens mounting bracket for the passing of the light reflected by the at least one reflector, a support member mounted in the tubular lens mounting bracket, a grating movably mounted on the support member and adapted for controlling the incident angle of the light reflected by the at least one reflector into the lens, and an electromagnetic valve connected with a retractable valve stem thereof to the grating and operable to control the tilt angle of the grating. Further, the lens comprises a bottom plane as a light incident surface for receiving the light reflected by the at least one reflector, a top plane opposite to the bottom plane as a light exit surface and at least one positioning member located on a peripheral edge thereof. Further, the top plane comprises at least one convex arched surface.

In one embodiment of the present invention, the top plane of the lens further comprises at least one curved surface extended around the at least one convex arched surface. Alternatively, asymmetric semi-annular convex curved surfaces can be provided around the convex arched surface above and below the horizontal centerline. Further, the sloping surface of the bottom plane consists of a plurality of arched sloping surfaces that are connected to one another and slope in different directions and at different angles.

Further, the grating is formed of a light-transmissive plate having two opposing planes and defining a vertical centerline. Further, the grating comprises an arched sloping surface located on a middle area of one plane thereof with the topmost edge of the arched sloping surface abutted to the vertical centerline.

The grating can be configured to provide two arched sloping surfaces that are respectively disposed at two opposite lateral sides relative to the vertical centerline in an asymmetric manner with the topmost edge of each of the arched sloping surfaces abutted to the vertical centerline.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic drawing illustrating the light path of a light module for vehicle head light according to the prior art.
FIGS. 2A-2C are elevational view, side view and bottom view of the basic architecture of a lens for lens incorporated light module in accordance with the present invention
FIGS. 3A and 3B illustrate a first embodiment of the lens for lens incorporated light module in accordance with the present invention.
FIGS. 3C and 3D illustrate a second embodiment of the lens for lens incorporated light module in accordance with the present invention.
FIGS. 3E and 3F illustrate a third embodiment of the lens for lens incorporated light module in accordance with the present invention.
FIGS. 4A and 4B illustrate a fourth embodiment of the lens for lens incorporated light module in accordance with the present invention.
FIGS. 4C and 4D illustrate a fifth embodiment of the lens for lens incorporated light module in accordance with the present invention.
FIGS. 4E and 4F illustrate a sixth embodiment of the lens for lens incorporated light module in accordance with the present invention.
FIGS. 5A and 5B illustrate a seventh embodiment of the lens for lens incorporated light module in accordance with the present invention.
FIGS. 5C and 5D illustrate an eighth embodiment of the lens for lens incorporated light module in accordance with the present invention.
FIG. 6 is a schematic drawing illustrating a lens incorporated light module in accordance with a first embodiment of the present invention.
FIG. 7 is a schematic drawing illustrating a lens incorporated light module in accordance with a second embodiment of the present invention.
FIG. 8 is a schematic drawing illustrating a lens incorporated light module in accordance with a third embodiment of the present invention.
FIGS. 9A-9C is a schematic drawing illustrating a first embodiment of the diffraction grating used in the lens incorporated light module in accordance with the present invention.
FIGS. 9D-9F is a schematic drawing illustrating a second embodiment of the diffraction grating used in the lens incorporated light module in accordance with the present invention.
FIGS. 10A-10C illustrate a ninth embodiment of the lens for lens incorporated light module in accordance with the present invention.
FIGS. 10D-10F illustrate a tenth embodiment of the lens for lens incorporated light module in accordance with the present invention.
FIGS. 11A-11C illustrate an eleventh embodiment of the lens for lens incorporated light module in accordance with the present invention.
FIGS. 11D-11F illustrate a twelfth embodiment of the lens for lens incorporated light module in accordance with the present invention.

### DETAILED DESCRIPTION OF THE PREFERRED EMBODIMENT

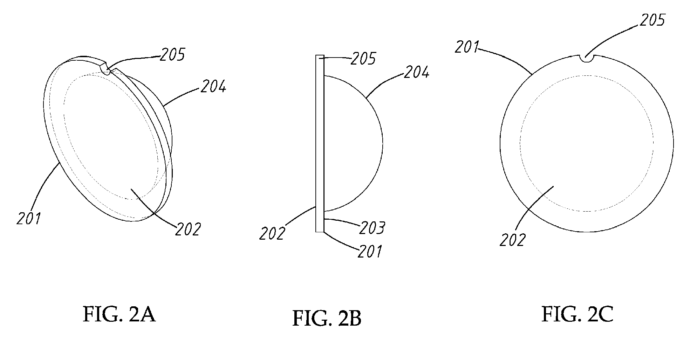

Referring to FIGS. 2A-2C, a basic architecture of a lens for lens incorporated light module in accordance with the present invention is shown. FIG. 2A is an oblique bottom elevational view. FIG. 2B is a side view. FIG. 2C is a bottom side. As illustrated, the lens is made from a light-transmissive plate (201), comprising two vertical planes (202)(203), wherein one plane, namely, the bottom plane (202) is a light incident surface located at a bottom side thereof and, the other plane, namely, the top plane (203) is a light exit surface located at an opposing top side thereof and providing at least one convex arched surface (204). Alternatively, the light exit surface (203) can be configured to provide at least one arched surface. The lens further comprises a positioning member (205) made in the form of, for example, a notch, and located on the border edge of the light-transmissive plate (201). Based on this basic architecture, various embodiments of the lens are described hereinafter.

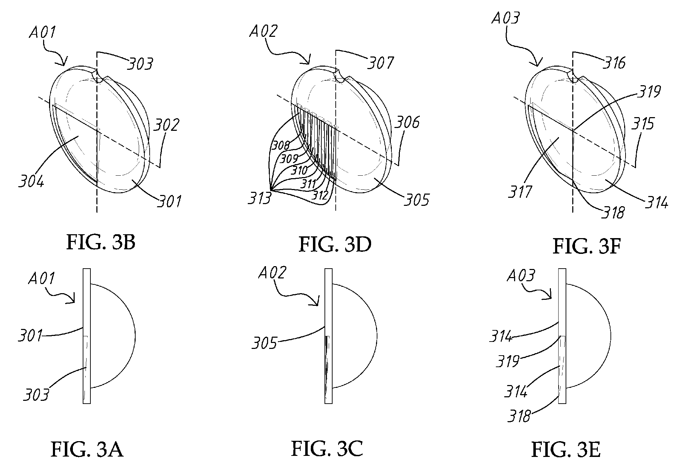

Referring to FIGS. 3A and 3B, a first embodiment of the lens for lens incorporated light module in accordance with the present invention is shown. As illustrated, the bottom plane (301) of the lens (A01) comprises a beveled flat surface (304) disposed in the area below the horizontal centerline (302) and in the left side relative to the vertical centerline (303). In actual application, in addition to the beveled flat surface (304), the bottom plane (301) can also be configured to provide at least one beveled flat surface or arched sloping surface in the area in the right side relative to the vertical centerline (303) or above the horizontal centerline (302).

Referring to FIGS. 3C and 3D, a second embodiment of the lens for lens incorporated light module in accordance with the present invention is shown. As illustrated, the bottom plane (305) of the lens (A02) comprises a plurality of beveled flat surfaces disposed in the area below the horizontal centerline (306) and in the left side relative to the vertical centerline (307), wherein the beveled flat surfaces (308)∼(312) have different angles of slope; the beveled flat surfaces (313) have one same angle of slope.

Referring to FIGS. 3E and 3F, a third embodiment of the lens for lens incorporated light module in accordance with the present invention is shown. As illustrated, the bottom plane (314) of the lens (A03) comprises an arched sloping surface (317) disposed in the area below the horizontal centerline (315) and in the left side relative to the vertical centerline (316). In actual application, the arched sloping surface (317) can be configured consisting of a plurality of arched sloping surfaces of different angles of slope connected to one another. This arched sloping surface (317) is called as arched sloping surface but not the general term of arched surface is just because one end (318) of this arched sloping surface that is disposed adjacent to the bottom edge of the lens (A03) is located on the surface of the bottom plane (314) and the opposite end (319) of this arched sloping surface that is abutted to the horizontal centerline (315) is curved inwardly toward the inside of the surface of the bottom plane (314); to the surface of the bottom plane (314), this arched sloping surface (317) is an arched surface having an angle of slope, and therefore it is called as a arched sloping surface. Further, the slope angle and direction of each beveled flat surface or arched sloping surface can be modified according to the angle and direction the incident light to be refracted. In the embodiment shown in FIGS. 3A and 3B, the beveled flat surface (304) slopes toward the inner side of the bottom plane (301) in a relatively deeper manner in direction from the bottom edge of the lens (A01) to the horizontal centerline (302). In actual application, the beveled flat surface (304) can be configured to slope toward the inner side of the bottom plane (301) in a relatively deeper manner in direction from the horizontal centerline (302) to the bottom edge of the lens (A01), or in direction from the vertical centerline (303) to the left side of the lens (A01).

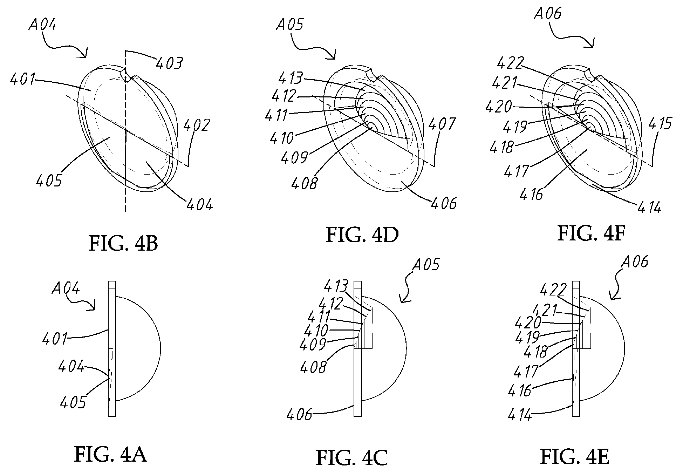

Referring to FIGS. 4A and 4B, a fourth embodiment of the lens for lens incorporated light module in accordance with the present invention is shown. As illustrated, the bottom plane (401) of the lens (A04) comprises two arched sloping surfaces (404)(405) respectively disposed below the horizontal centerline (402) in opposing left and right sides relative the vertical centerline (403). The arched sloping surfaces (404)(405) can be respectively configured consisting of a plurality of arched sloping surfaces of different angles of slope.

Referring to FIGS. 4C and 4D, a fifth embodiment of the lens for lens incorporated light module in accordance with the present invention is shown. As illustrated, the bottom plane (406) of the lens (A05) comprises a plurality of beveled flat surfaces (408)∼(413) disposed in the area above the horizontal centerline (407) and connected to one another in direction from the horizontal centerline (407) to the border edge of the bottom plane (406), wherein the beveled flat surfaces (408)∼(413) have different angles of slope that slope toward the inner side of the bottom plane (406) in a relatively deeper manner from the first (inner) arched sloping surface (408) toward the last (outer) arched sloping surface (413).

Referring to FIGS. 4E and 4F, a sixth embodiment of the lens for lens incorporated light module in accordance with the present invention is shown. As illustrated, the bottom plane (414) of the lens (A06) comprises an arched sloping surface (416) disposed in the area below the horizontal centerline (415) and consisting of a series of arched sloping surfaces that slope in different directions, and a series of arched sloping surfaces (417)∼(422) disposed in the area above the horizontal centerline (415) and sloping in different directions. The arched sloping surfaces (417)∼(422) can be configured in the same manner as the arched sloping surfaces (408)∼(413) of the lens (A05) of the aforesaid fifth embodiment.

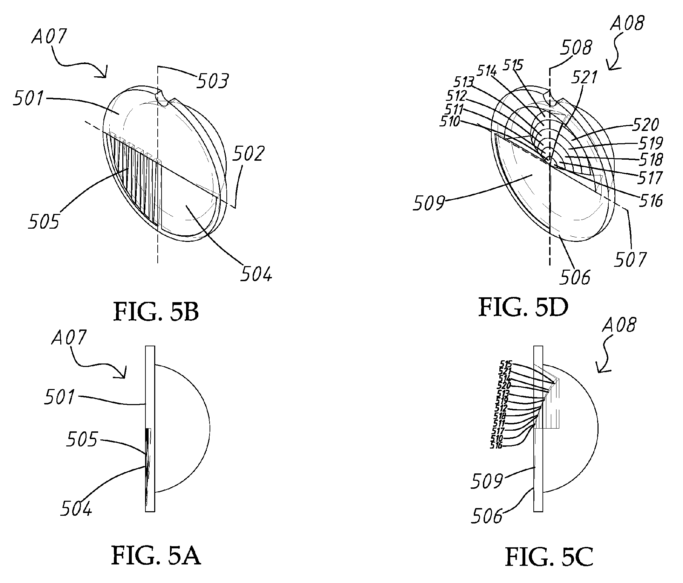

Referring to FIGS. 5A and 5B, a seventh embodiment of the lens for lens incorporated light module in accordance with the present invention is shown. As illustrated, the bottom plane (501) of the lens (A07) comprises a plurality of beveled flat surfaces (505) disposed in the area below the horizontal centerline (502) and in the left side relative to the vertical centerline (503) and configured similar to the structure of the beveled flat surfaces (308)∼(313) of the lens (A02) shown in FIGS. 3C and3D, and an arched sloping surface(504) disposed in the area below the horizontal centerline (502) and in the right side relative to the vertical centerline (503).

Referring to FIGS. 5C and 5D, an eighth embodiment of the lens for lens incorporated light module in accordance with the present invention is shown. As illustrated, the bottom plane (506) of the lens (A08) comprises a beveled flat surface (509) disposed in the area below the horizontal centerline (507) and in the left side relative to the vertical centerline (508), and two sets of arched sloping surfaces (510)∼(515) and (516)∼(521) disposed in the area above the horizontal centerline (507) and symmetrically disposed in the opposing left and right sides relative to the vertical centerline (508) and configured similar to the structure of the arched sloping surface(408)∼(413) of the lens (A05) shown in FIGS. 4C and 4D.

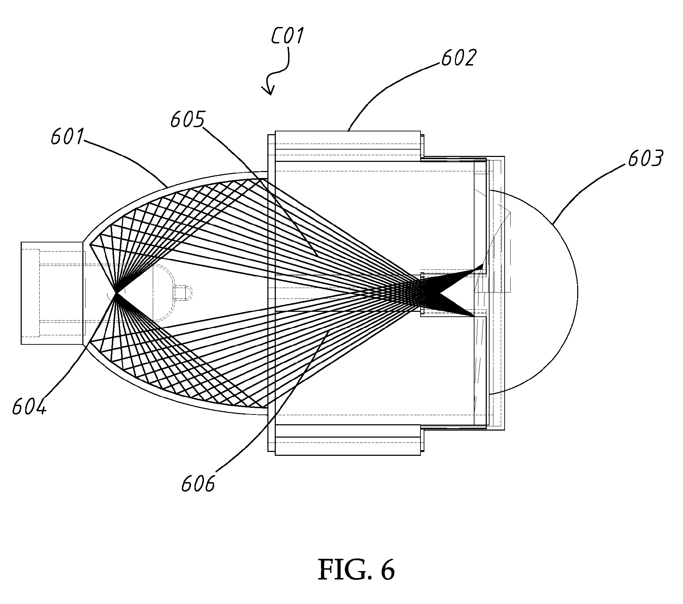

Referring to FIG. 6, a lens incorporated light module in accordance with a first embodiment of the present invention is shown. As illustrated, the lens incorporated light module (C01) comprises a reflector (601), at least one lamp bulb or LED-based light source (604) mounted in the reflector (601), and a tubular lens mounting bracket (602) connected with one end thereof to a bottom side of the reflector (601), a lens (603) mounted in an opposite end of the tubular lens mounting bracket (602). The lens incorporated light module (C01) enables the light rays (605)(606) emitted by the light source (604) to be finally refracted through the lens (603) to the outside for low beam light or high beam light application, achieving optimal performance and efficiency.

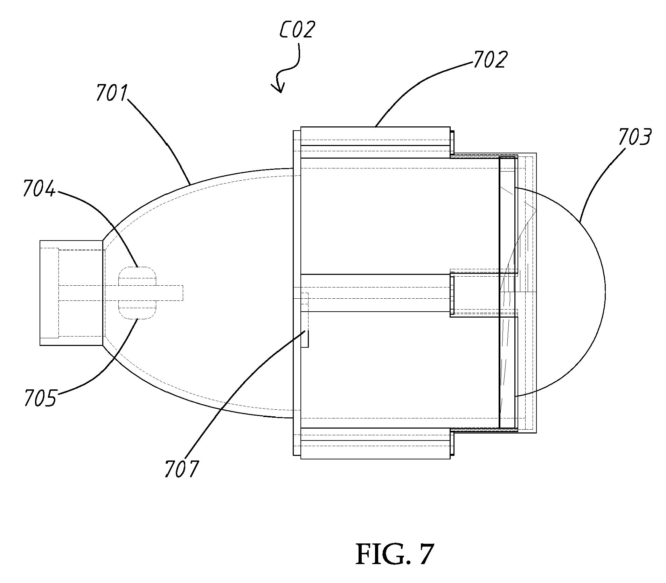

Referring to FIG. 7, a lens incorporated light module in accordance with a second embodiment of the present invention is shown. As illustrated, the lens incorporated light module (C02) comprises a reflector (701), a plurality of LED light sources (704)(705) mounted in the reflector (701), a tubular lens mounting bracket (702) connected with one end thereof to a bottom side of the reflector (701), a lens (703) selected from the aforesaid various embodiments of lens of the present invention and mounted in an opposite end of the tubular lens mounting bracket (702), a light shield (707) mounted in the tubular lens mounting bracket (702) and extended to an inner bottom side of the reflector (701), and an electromagnetic valve (not shown) fixedly (or detachably connected with the light shield (707) and adapted for controlling the tilt angle of the light shield (707). The light shield (707) is preferably so configured that the heights on the opposing left and right sides relative to the vertical centerline are unequal, enabling the low beam light illumination region to exhibit a clear cutoff line, avoiding the high beam from shining into the eyes of the drivers of the cars coming from the opposite direction and achieving the best low beam lighting efficiency.

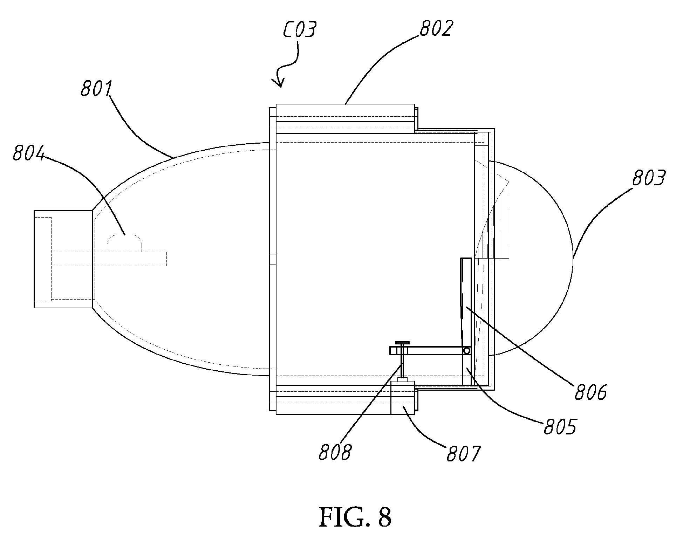

Referring to FIG. 8, a lens incorporated light module in accordance with a second embodiment of the present invention is shown. As illustrated, the lens incorporated light module (C03) comprises a reflector (801), at least one LED light source (804) selected from the aforesaid various embodiments of lens of the present invention or conventional plano-convex lenses and mounted in the reflector (801), a tubular lens mounting bracket (802) connected with one end thereof to a bottom side of the reflector (801), a lens (803) mounted in an opposite end of the tubular lens mounting bracket (802), a support member (805) mounted in the tubular lens mounting bracket (802) at a back side of the lens (803), a grating (806) movably mounted on the support member (805) and adapted for controlling the incident angle of the light reflected by the reflector (801) into the lens (803), and an electromagnetic valve (807) connected with a retractable valve stem (808) thereof to the grating (806) and operable to control the tilt angle of the grating (806). In actual application, a light shield (707) as shown in FIG. 7 can be mounted in the tubular lens mounting bracket (802) in the inner bottom side of the reflector (801).

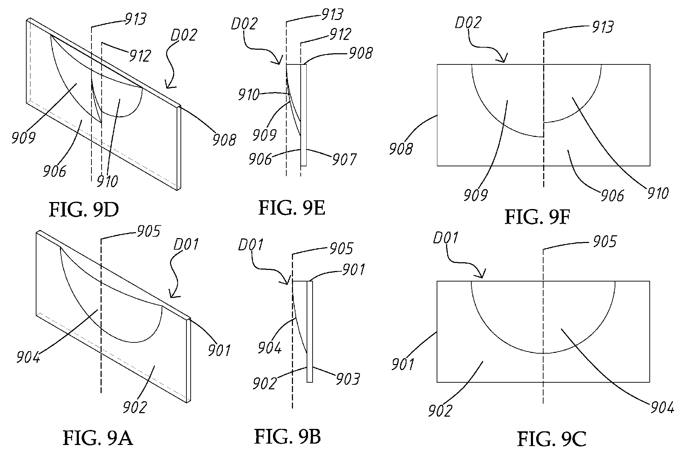

Referring to FIGS. 9A-9C, a first embodiment of the grating used in the lens incorporated light module in accordance with the present invention is shown. As illustrated, the grating (D01) is a light-transmissive plate (901) having two opposing planes (902)(903). The light-transmissive plate (901) defines a vertical centerline (905), comprising an arched sloping surface (904) located on a middle area of one plane (902) thereof with the topmost edge of the arched sloping surface (904) abutted to the vertical centerline (905). In actual application, the arched sloping surface (904) can be configured consisting of a plurality of arched sloping surfaces that slope at different slope angles and are connected to one another.

Referring to FIGS. 9D-9F, a second embodiment of the grating used in the lens incorporated light module in accordance with the present invention is shown. As illustrated, the grating (D02) is a light-transmissive plate (908) having two opposing planes (906)(907). The light-transmissive plate (908) defines a vertical centerline (913), comprising two arched sloping surfaces (909)(910) respectively located on one plane (906) at two opposite sides relative to a vertical centerline (912) thereof in an asymmetric manner with respective topmost edges of the arched sloping surfaces (909)(910) abutted to the vertical centerline (913) of the light-transmissive plate (908). In actual application, each of the arched sloping surfaces (909)(910) can be configured consisting of a plurality of arched sloping surfaces that slope at different slope angles and are connected to one another.

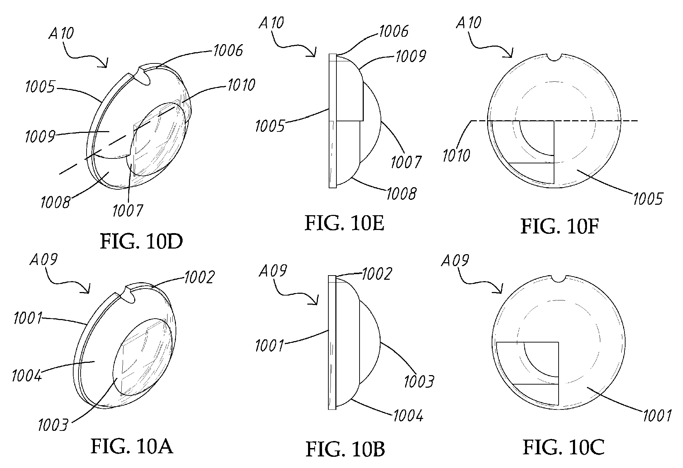

Referring to FIGS. 10A-10C, a ninth embodiment of the lens for lens incorporated light module in accordance with the present invention is shown. As illustrated, the bottom plane (1001) of the lens (A09) can be configured in any of the aforesaid various embodiments. The top plane (1002) comprises a convex arched surface (1003) located at the center thereof, and an annular convex curved surface (1004) extended around the convex arched surface (1003). The convex arched surface (1003) and the annular convex curved surface (1004) work as light exit surfaces.

Referring to FIGS. 10D-10F, a tenth embodiment of the lens for lens incorporated light module in accordance with the present invention is shown. As illustrated, the bottom plane (1005) of the lens (A 10) can be configured in any of the aforesaid various embodiments. The top plane (1006) comprises a convex arched surface (1007) located at the center thereof, and two semi-annular convex curved surfaces (1008)(1009) respectively extended around the convex arched surface (1007) in the opposing top and bottom sides relative to the horizontal centerline (1010). The convex arched surface (1007) and the semi-annular convex curved surfaces (1008)(1009) work as light exit surfaces. Further, each sloping surface of the bottom plane of the lens (A01)∼(A10) in any of the aforesaid various embodiments is disposed in an inner side of the bottom plane. However, the sloping surfaces of the bottom plane can be selectively disposed in the inner side and/or outer side of the bottom plane, achieving the same effects.

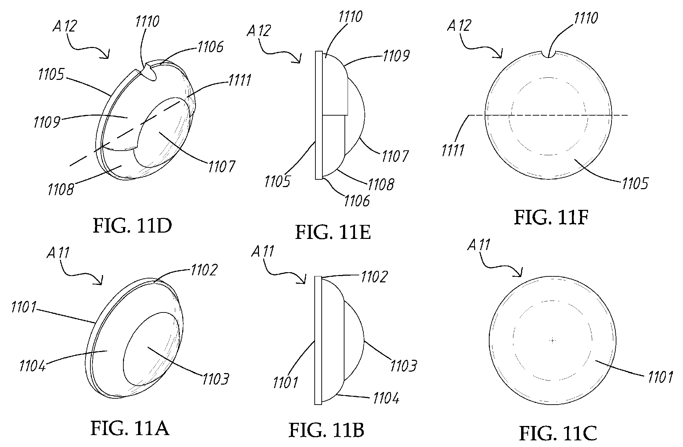

Referring to FIGS. 11A-11C, an eleventh embodiment of the lens for lens incorporated light module in accordance with the present invention is shown. As illustrated, the bottom plane (1101) of the lens (A11) is a planar surface; the top plane (1102) of the lens (A11) comprises a convex arched surface (1103) located at the center thereof and an annular convex curved surface (1104) extended around the convex arched surface (1103). The convex arched surface (1103) and the annular convex curved surface (1104) work as light exit surfaces.

Referring to FIGS. 11D-11F, a twelfth embodiment of the lens for lens incorporated light module in accordance with the present invention is shown. As illustrated, the bottom plane (1105) of the lens (A 12) is a planar surface; the top plane (1106) of the lens (A12) comprises a convex arched surface (1107) located at the center, two semi-annular convex curved surfaces (1108)(1109) extended around the convex arched surface (1107) in the opposing top and bottom sides relative to the horizontal centerline (1011), and at least one positioning member (1110) respectively made in the form of a notch and located on the border edge of the lens (A12) for directional positioning. The convex arched surface (1107) and the semi-annular convex curved surfaces (1108)(1109) work as light exit surfaces.

In conclusion, the invention provides a lens incorporated light module, which is practical for use in a vehicle head light, enabling the most of the emitted light to be become low beam light or high beam light. When compared to the conventional designs that simply enable one half of the emitted light to be utilized for lighting when switched to the low beam mode, the invention achieves better performance.

## Claims

1. A lens incorporated light module (C01/C02/C03), comprising:
at least one light source (604/704/705/804);
at least one reflector (601/701/801) surrounding said at least one light source (604/704/705/804) and adapted for reflecting the light emitted by said at least one light source (604/704/705/804) toward an outer side;
a tubular lens mounting bracket (602/702/802) having one end thereof connected to a bottom side of said at least one reflector (601/701/801); and
a lens (A01∼12/703/803) formed of a light-transmissive plate (201/901/908) and mounted in an opposite end of said tubular lens mounting bracket (602/702/802) for the passing of the light reflected by said at least one reflector (601/701/801), said lens (A01∼12/703/803) comprising a bottom plane (202/301/305/314/ 401/406/414/501/506/1101/1105) as a light incident surface for receiving the light reflected by said at least one reflector (601/701/801), a top plane (203/1002/1006/1102/1106) opposite to said bottom plane (202/301/305/314/401/406/414/501/506/1101/ 1105) as a light exit surface and at least one positioning member (205/1110) located on a peripheral edge thereof, said top plane (203/1002/1006/1102/1106) comprising at least one convex arched surface (204/1003/1007/1103/1107), said bottom plane (202/301/ 305/314/401/406/414/501/506/1101/1105) comprising at least one sloping surface.

2. The lens incorporated light module (C01/C02/C03) as claimed in claim 1, wherein said top plane (203/1002/1006/1102/1106) further comprises at least one curved surface disposed around the said at least one convex arched surface (204/1003/1007/1103/1107) of said top plane (203/1002/1006/ 1102/1106).

3. The lens incorporated light module (C01/C02/C03) as claimed in claim 1, wherein said lens (A01∼12/703/803) defines a vertical centerline (303/307/316/403/503/508/905/912/913) and a horizontal centerline (302/306/315/402/407/415/502/507/1010/ 1011); the said at least one sloping surface of said bottom plane (202/301/305/314/401/406/414/501/506/1101/1105) is disposed below said horizontal centerline (302/306/315/402/407/415/502/ 507/1010/1011) at one lateral side relative to said vertical centerline (303/307/316/403/503/508/905/912/913), each said sloping surface being a beveled flat surface (304/308∼313).

4. The lens incorporated light module (C01/C02/C03) as claimed in claim 1, wherein said lens (A01∼12/703/803) defines a vertical centerline (303/307/316/403/503/508/905/912/913) and a horizontal centerline (302/306/315/402/407/415/502/507/1010/ 1011); said bottom plane (202/301/305/314/401/406/414/501/506/ 1101/1105) comprises at least one sloping surface disposed below said horizontal centerline (302/306/315/402/407/415/502/507/ 1010/1011) at one lateral side relative to said vertical centerline (303/307/316/403/503/508/905/912/913), each said sloping surface being an arched sloping surface.

5. The lens incorporated light module (C01/C02/C03) as claimed in claim 1, wherein said lens (A01∼12/703/803) defines a vertical centerline (303/307/316/403/503/508/905/912/913) and a horizontal centerline (302/306/315/402/407/415/502/507/1010/ 1011); the said bottom plane (202/301/305/314/401/406/414/501/ 506/1101/1105) comprises at least one sloping surface disposed below said horizontal centerline (302/306/315/402/407/415/502/ 507/1010/1011), each said sloping surface being an arched sloping surface.

6. The lens incorporated light module (C01/C02/C03) as claimed in claim 1, wherein said lens (A01∼12/703/803) defines a vertical centerline (303/307/316/403/503/508/905/912/913) and a horizontal centerline (302/306/315/402/407/415/502/507/1010/ 1011); the said bottom plane (202/301/305/314/401/406/414/501/ 506/1101/1105) comprises at least one sloping surface disposed above said horizontal centerline (302/306/315/402/407/415/502/ 507/1010/1011), each said sloping surface being an arched sloping surface.

7. The lens incorporated light module (C01/C02/C03) as claimed in claim 1, further comprising a light shield (707) mounted in said tubular lens mounting bracket (602/702/802) adjacent to said reflector (601/701/801).

8. The lens incorporated light module (C01/C02/C03) as claimed in claim 1, further comprising a support member (805) mounted in said tubular lens mounting bracket (602/702/802), a grating (806/D01/D02) movably mounted on said support member (805) and adapted for controlling the incident angle of the light reflected by said reflector (801) into the lens (803), and an electromagnetic valve (807) connected with a retractable valve stem (808) thereof to the grating (806/D01/D02) and operable to control the tilt angle of said grating (806/D01/D02).

9. The lens incorporated light module (C01/C02/C03) as claimed in claim 8, wherein said grating (806/D01/D02) is formed of a light-transmissive plate (901) having two opposing planes (902)(903) and defining a vertical centerline (905), said grating (806/D01/D02) comprising an arched sloping surface (904) located on a middle area of one plane (902) thereof with the topmost edge of the said arched sloping surface (904) abutted to the said vertical centerline (905).

10. A lens incorporated light module (C01/C02/C03), comprising:
at least one light source (604/704/705/804);
at least one reflector (601/701/801) surrounding said light source (604/704/705/804) and adapted for reflecting the light emitted by said at least one light source (604/704/705/804) toward an outer side;
a tubular lens mounting bracket (602/702/802) having one end thereof connected to a bottom side of said at least one reflector (601/701/801);
a lens (A01∼12/703/803) formed of a light-transmissive plate (201/901/908) and mounted in an opposite end of said tubular lens mounting bracket (602/702/802) for the passing of the light reflected by said at least one reflector (601/701/801), said lens (A01∼12/703/803) comprising a bottom plane (202/301/305/314/ 401/406/414/501/506/1101/1105) as a light incident surface for receiving the light reflected by said at least one reflector (601/701/801), a top plane (203/1002/1006/1102/1106) opposite to said bottom plane (202/301/305/314/401/406/414/501/506/1101/ 1105) as a light exit surface and at least one positioning member (205/1110) located on a peripheral edge thereof, said top plane (203/1002/1006/1102/1106) comprising at least one convex arched surface (204/1003/1007/1103/1107);
a support member (805) mounted in said tubular lens mounting bracket (602/702/802);
a grating (806/D01/D02) movably mounted on said support member (805) and adapted for controlling the incident angle of the light reflected by said at least one reflector (601/701/801) into the lens (A01∼12/703/803); and
an electromagnetic valve (807) connected with a retractable valve stem (808) thereof to the grating (806/D01/D02) and operable to control the tilt angle of said grating (806/D01/D02).

11. The lens incorporated light module (C01/C02/C03) as claimed in claim 10, wherein said grating (806/D01/D02) is formed of a light-transmissive plate (901) having two opposing planes (902)(903) and defining a vertical centerline (905), said grating (806/D01/D02) comprising an arched sloping surface (904) located on a middle area of one plane (902) thereof with the topmost edge of the said arched sloping surface (904) abutted to the said vertical centerline (905).

12. The lens incorporated light module (C01/C02/C03) as claimed in claim 10, wherein said top plane (203/1002/1006/1102/1106) of said lens (A01∼12/703/803) further comprises at least one curved surface (1004/1008/1009/1104/1108/1109) extended around the said at least one convex arched surface (204/1003/1007/1103/1107).

13. The lens incorporated light module (C01/C02/C03) as claimed in claim 10, further comprising a light shield (707) mounted in said tubular lens mounting bracket (602/702/802) adjacent to said reflector (601/701/801).
